# EUROPEAN PATENT APPLICATION

(11) **EP 3 708 895 A1**
(43) Date of publication of application: **16.09.2020**
(21) Application number: 20162819.5
(22) Date of filing: 12.03.2020
(51) Int. Cl.: F16P 1/02

(54) **IMPROVED WELDING SCREEN**

(30) Priority: 13.03.2019 GB 201903453
(71) Applicant: Todun Industrial Co Ltd., Lutterworth, Leicestershire LE17 4AT (GB)
(72) Inventor: FLOOR, Gerritt, 3761 CN Soest (NL)
(74) Representative: Potter Clarkson

(57) **Abstract**

The present invention relates to a welding screen (10) for shielding welding work locations comprising a welding curtain (22) and a frame structure (12) for removably mounting the welding curtain (22), wherein the welding curtain (22) is connected to the frame structure (12) such that at least parts of a side edge (28) of the welding curtain (22) are received within a cavity (18) of the frame structure (12).

## Description

### Background of the Invention

The present invention relates to a welding screen for shielding welding work locations. The invention further relates to a frame structure and a welding curtain used in such welding screens.

Welding operations, whether carried out by a human or a machine have a variety of recognised health and safety issues associated with it. The ever-present hazard of burns and property ignition from the weld-sparks and welding arcs presents a main hazard. However, an equally dangerous issue is present in the form of Ultra-Violet (UV) radiation emitted by the welding torches that may damage the unshielded eye. The UV-radiation emanating from the welding arc developed in the welding process can be of an intensity to cause burns and possibly permanent damage to the unshielded eye glancing at the welding process, even from a distance. For these and other reasons, welding safety screens have been used widely. Welding screens come in various shapes and designs, ranging from individually framed, often rectangular, screen panels to overhead-hung structures, much like a shower curtain that may be pulled across large areas of a manufacturing site. This disclosure is mainly concerned with individually framed screen panels that can be arranged next to each other to create a chain of two or more welding screen panels connected side-to-side, or, alternatively, as a radiating "star" of panel sections forming separate compartments.

Individual panel-shaped welding screens typically include a frame structure that supports a welding curtain. The welding curtain may be spanned between a plurality of struts that make up the frame structure. To this end, the side edges of the welding curtain may include a variety of lugs that may be used to attach the welding curtains to the frame structure using tie wraps or similar straps. This solution has the problem that replacing the welding curtain is very time consuming and requires the use of new tie wraps. Moreover, there is no guarantee that all of the side edges of the welding curtain are in contact with or closely connected to the struts of the frame structure. Rather, gaps may form between the side edges of the welding curtain and the frame structure that allow UV-radiation to escape through the welding screen and are, therefore, potentially dangerous to the customer. This problem is aggravated by users that put two or more individual welding screen panels together at, for example, 90 degrees to create two-sided welding screen arrangement. In this case, UV-radiation may not only escape via the gaps between the welding curtain and the support struts of the frame structure but also between struts of the frame structures of adjacent welding screen panels.

In view of the above, there is a need for a new, improved welding screen that prevents gaps between the welding curtain and the frame structure and between the frame structures of adjacent welding screen panels respectively.

It is an aim of the present invention to solve or at least ameliorate one or more problems of the prior art.

### Summary of the Invention

Aspects and embodiments of the disclosure provide an agricultural implement and an agricultural machinery as claimed in the appended claims.

According to an aspect of the present disclosure, there is provided a welding screen for shielding welding work locations comprising a welding curtain and a frame structure for removably mounting the welding curtain, wherein the welding curtain is connected to the frame structure such that at least parts of a side edge of the welding curtain are received within a cavity of the frame structure. The frame structure may be an arrangement of struts, such as columns and cross-bars or a single housing structure that defines the aforementioned cavity. The cavity may be sized to suit the dimensions of the side edge of the welding curtain such that the cavity is slightly larger than the side edge of the welding curtain to facilitate easy insertion and removal of the welding curtain from the frame structure.

Attaching a side edge of the welding curtain to an inner cavity of the frame structure guarantees that there are no gaps between the welding curtain and the frame structure that could allow UV-light emitted by the welding process to pass. The new welding screen design is, therefore, gap-free and will prevent UV light from passing even along the edges of the welding curtain.

In another embodiment, the frame structure comprises at least one guide rail that defines a cavity for receiving at least parts of the side edge of the welding curtain. As will be described in more detail below, the side edge of the welding curtain may simply be slotted into the guide rail to connect the welding curtain to the frame structure. In some embodiments, no further attachment is required between the welding curtain and the frame structure. Accordingly, set-up of the welding screen and replacement of the welding curtain is simplified by means of the one or more guide rails provided on the frame structure. The cavity defined by the at least one guide rail may be a cavity that extends in a longitudinal direction along the inside of the guide rail. The guide rail may be an extruded profile that includes the cavity.

According to another embodiment, the guide rail comprises a slot having a width that is smaller than a diameter of the side edge of the welding curtain, and wherein the width of the slot is larger than a thickness of the welding curtain between its side edges. In other words, the slot is sized to allow most parts of the welding curtain to extend through the slot, yet the slot prevents the slightly thicker/larger side edge of the welding curtain from passing such that the side edge of the welding curtain cannot be pulled out of the cavity through the guide rail slot. The slot may extend along the longitudinal direction of the guide rail. To remove the welding curtain from the guide rail, the side edge of the welding curtain may be pulled out in a longitudinal direction of the guide rail.

The frame structure may comprise at least one support strut connected to and supporting the at least one guide rail. According to this embodiment, the frame structure comprises one or more two-part assemblies each consisting of a single support strut and one or more guide rails. The one or more guide rails may be permanently or removably connected to their respective support struts. In one embodiment, the guide rails are spot-welded to an outer surface of the support strut. In other embodiments, the one or more guide rails may be glued or removably connected to the support strut, for example by means of fastening members such as bolts. By dividing the frame structure into two-part assemblies comprising support struts and corresponding guide rails, the number and orientation of the guide rails can be chosen to suit the desired number of welding curtains and the overall layout of the welding screen.

The frame structure may comprise a first guide rail and a second guide rail, both guide rails being connected to and supported by one support strut. Accordingly, the support strut of this example may be used as a connector piece, such as a corner strut connecting two adjacent welding curtains without the introduction of any gaps between the two. Of course, any number of guide rails may be supported by each support strut of the frame structure. For example, the at least one support strut may include three or four guide rails attached to different sides of the support strut. In this case, the support strut may be used as the centre of a star-like welding screen arrangement, for example.

The first and second guide rails may both include a longitudinal slot, wherein the first and second guide rails are connected to the support strut such that the longitudinal slots face in substantially perpendicular directions.

In yet another embodiment, the guide rail may have a substantially triangular cross-section. If the guide rail is provided with a longitudinal slot, the slot may be arranged at a tip of the triangle. Two side walls that are arranged adjacent to the slot may be sized to retain the side edge of the welding curtain when the latter is received within the cavity. Of course, it is equivalently feasible to provide guide rails that have any other suitable cross-section, such as C-shaped, substantially rectangular cross-sections.

The at least one support strut may comprise a stand comprising a central collar for slipping parts of the stand over the support strut. With this slip-on stand, further support legs may be added to the support strut depending on the stability requirements of the welding screen layout. The stand may comprise a first leg extending from the central collar in the first direction and a second leg extending from the collar in an opposite, second direction.

According to another embodiment, the frame structure comprises a first support strut and a second support strut, the first support strut being connected to and supporting a first guide rail, the second support strut being connected to and supporting a second guide rail, and wherein the welding curtain has a first side edge, which is received in a cavity defined by the first guide rail, and an opposite, second side edge, which is received in a cavity defined by the second guide rail. In other words, the welding curtain of this embodiment is spanned between two guide rails, each of which is supported by an individual support strut. In one embodiment, both support struts are vertical columns so that a connection between the welding curtain and the frame structure safely prevents UV-radiation in a vertical direction from the bottom to the top of the welding screen.

In other embodiments, the frame structure further comprises cross-bars that extend between the first and second support struts in a substantially horizontal direction. In this case, further side edges of the welding curtain may be received in cavities of guide rails that may arranged on the cross-bars. In this embodiment, the frame structure may have a picture frame shape that encloses all of the side edges of the welding curtain within respective cavities of the support struts or the guide rails attached to the support struts.

The at least one side edge of the welding curtain that is received in the cavity of the frame structure may comprise a hem rope. The hem rope acts to increase the thickness of the side edge of the welding screen. Furthermore, the hem rope facilitates insertion and removal of the welding curtain into and from the cavity of the frame structure. In alternative embodiments, the hem rope may be replaced by a rigid bar that is sewn and/or seam-welded into the side edges of the welding curtain. Alternatively, the side edge of the welding curtain may have any other thickening portion, such as a thickened seam without the need for a hem rope or bar.

In yet another embodiment, the side edge of the welding curtain is a loop formed with a material of the welding curtain, the loop being sized for receiving the hem rope. In other words, a loop may be created at the side edges of the welding curtain, by wrapping the curtain material around the hem rope and connecting said curtain material to the remaining parts of the welding curtain (either by sewing and/or seam welding) along a seam line of the welding curtain. In other words, a side edge of the welding curtain material can be folded back over the hem rope to enclose the hem rope and create the loop that defines the side edge of the welding curtain.

In another embodiment, the side edge of the welding curtain is a loop connected to remaining parts of the welding curtain along a seam line of the welding curtain. In other words, the loop of this embodiment is a separate part, preferably made of the same material as the welding curtain. The separate loop is wrapped around the hem rope and comprises additional tabs extending from the loop for connecting the loop to the material of the welding curtain. The tabs of the loop may be connected to the remaining material of the welding curtain along a seam line by sewing and/or seam welding. The so connected welding curtain has a side edge defined by the loop that is attached to the remaining material of the welding curtain along the seam line.

In another aspect of the present disclosure, there is provided a frame structure for a welding screen, wherein the frame structure comprises a cavity for receiving at least parts of a side edge of the welding curtain.

In another embodiment, the frame structure comprises at least one guide rail that defines the cavity for receiving at least parts of the side edge of the welding curtain.

The frame structure may comprise at least one support strut connected to and supporting the at least one guide rail.

The frame structure may comprise a first guide rail and a second guide rail, both guide rails being connected to and supported by one support strut.

According to yet another embodiment, the first and second guide rails both include a longitudinal slot, and wherein the first and second guide rails are connected to their support strut such that their longitudinal slots face in substantially perpendicular directions.

According to another aspect of the present disclosure, there is provided a welding curtain for a welding screen, wherein the welding curtain comprises at least one side edge sized to be received in a cavity of a frame structure of a welding screen, and wherein the at least one side edge of the welding curtain comprises a hem rope.

The side edge of the welding curtain may be a loop formed with a material of the welding curtain, the loop being sized for receiving the hem rope.

The loop may be sewn and/or seam welded along a seam line of the welding curtain.

The side edge of the welding curtain may be a loop connected to remaining parts of the welding curtain along a seam line of the welding curtain.

Within the scope of this application it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Brief Description of the Drawings

One or more embodiments of the present disclosure will now be described by way of example only, with reference to the accompanying drawings, in which:
Figure 1 shows a schematic view of an embodiment of the welding screen according to the present disclosure;
Figure 2A shows a schematic top view of a frame strut connected to a guide rail;
Figure 2B shows a schematic top view of an alternative frame strut connected to a guide rail;
Figure 3A shows a schematic top view of a C-shaped guide rail;
Figure 3B shows a schematic top view of a substantially rectangular guide rail;
Figure 3C shows a schematic top view of a K-shaped guide rail;
Figures 4A to 4D show schematic top views of various guide rail arrangements on a single frame strut;
Figure 5A shows a schematic cross-section of a side edge of a welding curtain according to an embodiment of the present disclosure;
Figure 5B shows a schematic cross-section of a side edge of a welding curtain according to an embodiment of the present disclosure;
Figure 6A shows a variations of slip-on support stands;
Figure 6B shows a side view of a connecting mechanism for support stands;
Figure 7 shows a schematic view of the welding screen according to an embodiment of the present disclosure.

### Detailed Description of the Drawings

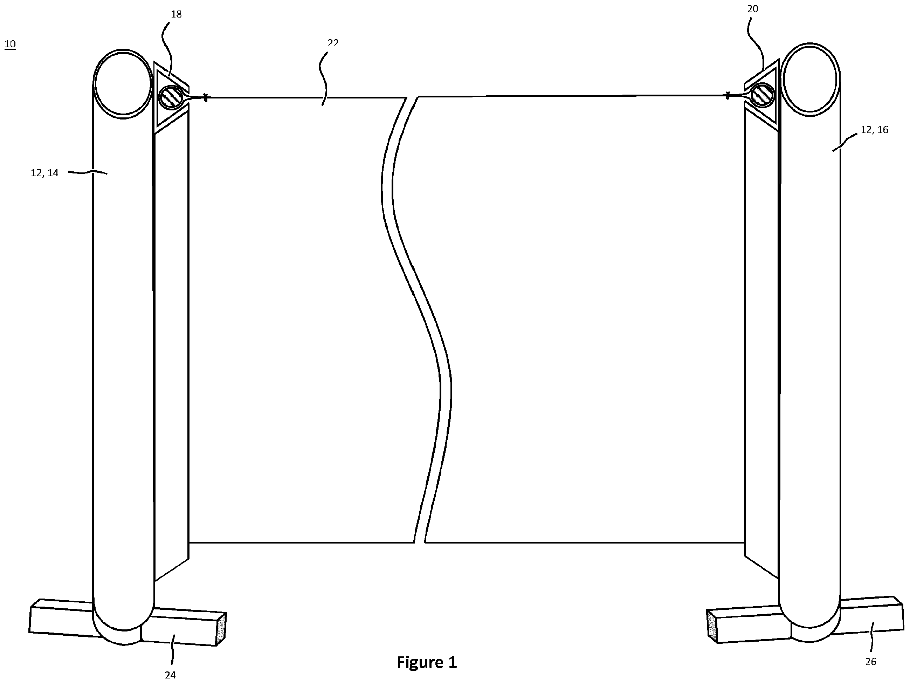

Figure 1 shows an embodiment of the welding screen according to an embodiment of the present disclosure. The welding screen 10 of this embodiment comprises a frame structure 12 and a welding curtain 22. The frame structure 12 of Figure 1 includes a first support strut 14 and a second support strut 16.

In Figure 1, the first and second support struts 14, 16 of frame structure 12 are constructed as upright posts or columns. It should be understood that this is, however, not necessarily the case and generally depends on the shape of the welding curtain. As shown in Figure 1, the support struts 14, 16 are tube shaped, more particularly cylindrical tubes. As will be described in more detail below, it is of course also possible to construct the support struts 14 and 16 in any other way, such as rectangular or as solid posts of any shape.

The first support strut 14 comprises a first guide rail 18. The second support strut 16 comprises a second guide rail 20. Both guide rails 18, 20 define a cavity for receiving at least parts of corresponding side edges of the welding curtain 22. In other words, the welding curtain 22 extends between the first and second support struts 14, 16 and has a first side edge that is received in a cavity defined by the first guide rail 18. A second side edge of the welding curtain 22 is received in a cavity defined by the second guide rail 20.

Both support struts 14, 16 include a stand 24, 26. In the embodiment of Figure 1, stands 24 and 26 are designed as 4-legged stands, which will be described in more detail below.

The welding curtain 22 may be made of any material that is capable of withstanding the high welding temperatures and is suitable for protecting workers from said temperatures and the welding arc light and levels of UV emitted by the welding torches. In one example, the welding curtain may be made of a PVC material. The welding curtain 22 may be semitransparent to allow workers to tell whether or not a welding process is currently in progress behind the welding screen. Alternatively, if there is no need to view the welding process, e.g. between welding bays, darker or opaque screens/curtains could be used. Preferably, the materials used for manufacturing welding curtain 22 conform to British standard BS EN 1598 or at least offer the same level of protection as this standard.

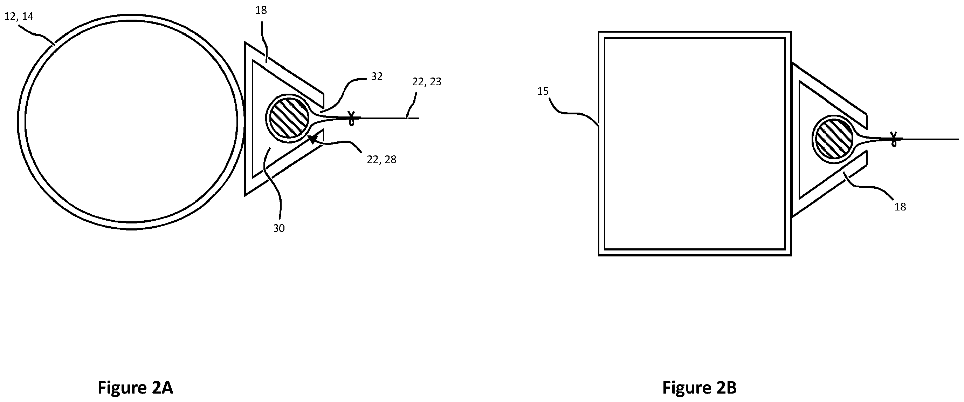

Referring to Figure 2A, there is shown a schematic top-view of a first side of the welding screen 10 of Figure 1. The top view in Figure 2A shows the first strut 14 of support frame 12 connected to the first guide rail 18. A side edge 28 of welding curtain 22 is received within the first guide rail 18. In particular, the first guide rail 18 is substantially triangular-shaped and defines a cavity 30 for receiving the side edge 28 of the welding curtain 22. The first guide rail 18 extends along the longitudinal direction of first strut 14, substantially from top to bottom. The first guide rail 18 includes a longitudinal slot 32 that extends along the length of the first guide rail 18. The slot 32 is arranged at an end of first guide rail 18 that is opposite to and faces away from the first support strut 14.

Side edge 28 of the welding curtain 22 is received within the cavity 30 of the first support strut 18. To this end, the side edge 28 of welding curtain 22 is sized larger (e.g. thicker) than a width of longitudinal slot 32. In the embodiment of Figure 2, the side edge 28 has a round cross-section. The diameter of the cylindrical side edge 28 of Figure 2 is larger than the width of slot 32. However, it will be appreciated that a main part 23 of welding curtain 22 that extents from the side edge 28 has a thickness, which is smaller than the width of longitudinal slot 32. Accordingly, only side edge 28 is enclosed within cavity 30 of the first support strut 18, whereas the main part 23 of welding screen 22 may extend out of the first support strut 18 via longitudinal slot 32.

The cross-sectional shape of the support struts is not limited to the cylindrical tube shape shown in Figure 2A. For example, Figure 2B shows an alternative, rectangular tube shape that is also feasible for one or all of the support struts. The support strut 15 shown in figure 2B is rectangular with four side walls that are arranged perpendicular with respect to each other. The first guide rail 18 may be attached to one of the side walls, either permanently or removably.

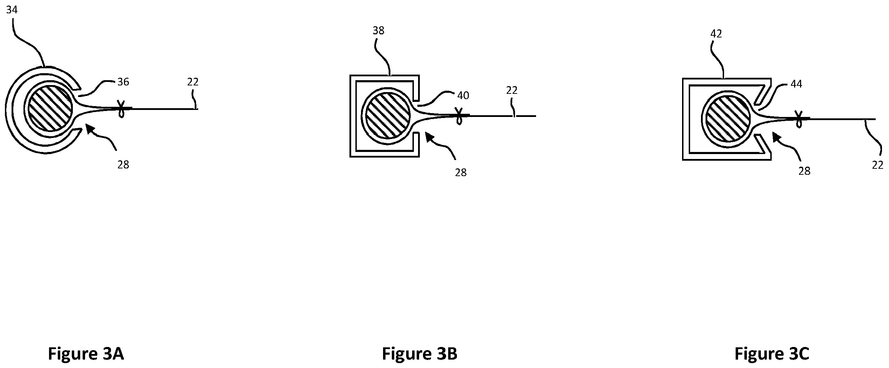

Figures 3A to 3C show further examples of the guide rails attached to the frame structure 12. It will be understood that guide rails 18, 20 of Figure 1 can be replaced by any of the structures shown in Figures 3A to 3C.

Figure 3A shows a C-shaped guide rail 34. The C-shaped guide rail 34 includes a longitudinal slot 36 which is similar to longitudinal slot 32 of Figure 2. Again, C-shaped guide rail 34 defines a cavity for receiving the side edge 28 of welding curtain 22, whereas slot 36 allows the remaining parts of the welding screen 32 to extend out of said cavity.

Figure 3B shows an alternative, in which the guide rail 38 is substantially rectangular in cross-section. The rectangular-shaped guide rail 38 includes a longitudinal slot 40 similar to slot 32 of Figure 2.

A last example is shown in Figure 3C in which another substantially rectangular guide rail 42 is illustrated. The guide rail 42 includes a longitudinal slot 44 sized to contain the side edge 28 of the welding screen and allow the remaining parts of welding screen 22 to protrude from the cavity defined by the guide rail 42.

In view of the above, it will be appreciated that the guide rails may have any shape or form that allows the side edge of welding curtain 22 to be contained within an enclosed cavity, whereas a least the main part 23 of the welding screen 22 may protrude out of the guide rail.

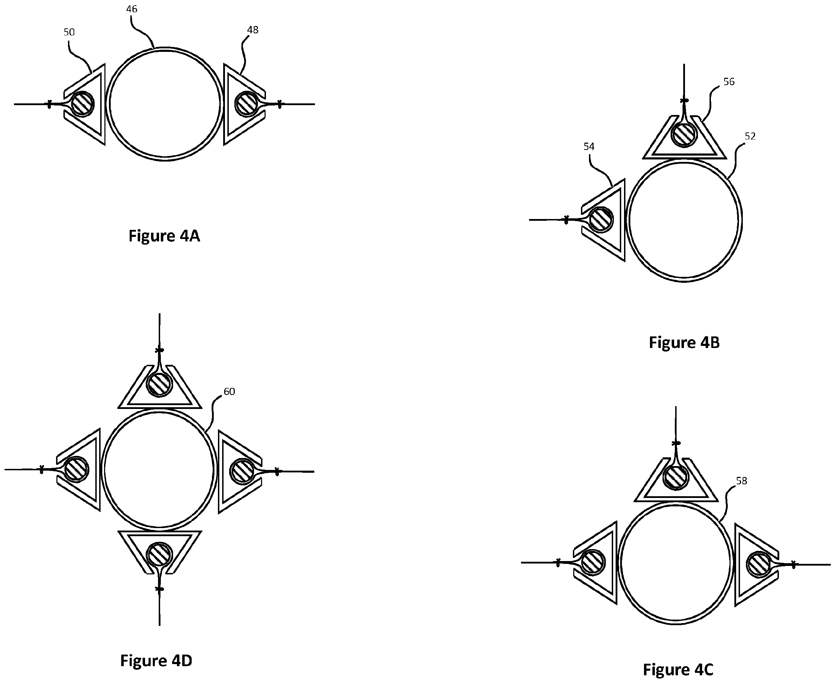

Turning to Figures 4A to 4D, there are shown further examples of the support struts that may form part of the frame structure of the weld screen.

In Figure 4A, there is shown a support strut 46 connected to two guide rails, a first guide rail 48 and a second guide rail 50. The first and second guide rails 48, 50 are attached to the support strut 46 on opposite sides thereof. In other words, the respective slots of the guide rails 48 and 50 face in opposite directions, away from a centre of support strut 46. Supplying the support strut 46 with two or more guide rails has the advantage that a single support strut, such as support strut 46, may be used to attach several welding curtains without any gaps between the welding curtains and the strut 46. This enables a modular design of the welding screen according to the present disclosure, which in turn facilitates the construction of welding enclosures of various shapes.

In another example shown in Figure 4B, a support strut 52 has a first guide rail 54 and a second guide rail 56 connected thereto. The first and second guide rails 54 and 56 are arranged substantially perpendicular to each other. In other words, their slots face in perpendicular directions. The support strut 52 of Figure 4B can, therefore, be used as a corner-unit that connects two welding curtains at an angle of around 90 degrees. Of course, it is also feasible to arrange the two or more guide rails at any other angle that may be suitable for a desired welding screen enclosure. Arranging the guide rails 54, 56 at different angles is particularly simple when the support strut 52 has a cylindrical shape such as the shape shown in Figures 4A to 4D. In some embodiments, the guide rails may be moveable around the circumference of the support strut 52, such that the angle between the guide rails 54 and 56 is individually adjustable.

Figures 4C and 4D show further examples of support struts 58, 60. Support strut 58 includes three guide rails attached at 90 degree angles with respect to each other, whereas support strut 60 includes four guide rails distributed at 90 degree angles about the circumference of support strut 60.

From the above, it should be understood that the number and arrangement of guide rails on the support struts may be varied to meet the operators demand. To this end, the guide rails may be removably or permanently attached to the support post or posts in a variety of different ways. In one example, the guide rails are permanently attached to the support strut by spot welding along the longitudinal length of the support struts/the guide rails. Alternatively, the guide rails may be glued to the support struts. A removable connection may be provided means of bolts or dovetail connectors, for example.

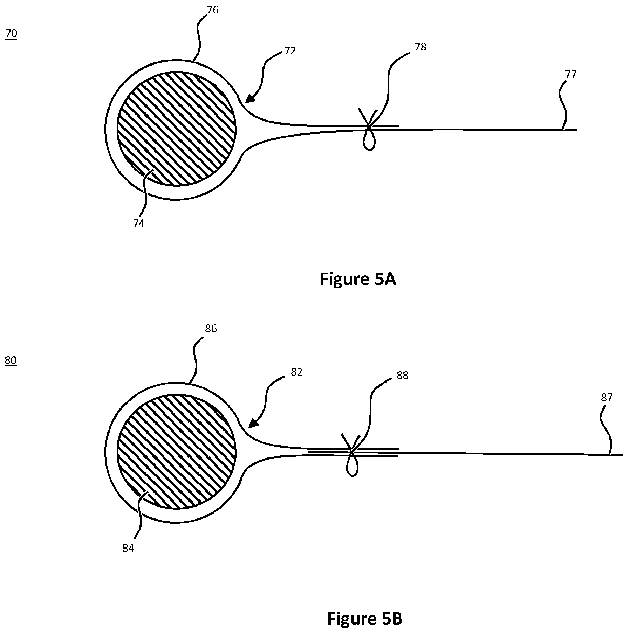

Examples of the welding curtain structure are shown in Figures 5A and 5B. In a first embodiment of the welding curtain 70 shown in Figure 5A, the side edge 72 includes a hem chord 74. Hem chord 74 is enclosed by a loop 76 formed out of the material of the welding curtain 70. In other words, loop 76 is created by wrapping the curtain material around hem chord 74 and sewing and/or seam welding the loop 76 to the main part 77 of welding curtain 70. The loop 76 and the main part 77 of welding curtain 70 are connected along a seam line 78 of the welding curtain 70. The side edge 72 of the welding curtain 70, therefore, extends outside of seam line 78 and is separated from the main part 77 by seam line 78. The side edge 72 of this example includes hem chord 74 and loop 76.

In another embodiment shown in Figure 5B, the welding curtain 80 again includes a a hem chord 84 and a loop 86 that define a side edge 82 of welding curtain 80. However, in contrast to the embodiment of welding curtain 70 shown in Figure 5A, the loop 86 of welding curtain 80 shown in Figure 5B is produced from a separate piece of material that is subsequently attached to the main part 87 of welding curtain 80 along a seam line 88. In other words, welding curtain 80 is a two part structure including loop 86 and the sheet material of main part 87. Together, the loop 86 and hem chord 84 define a side edge 82 that extends outside of seam line 88. Similar to the first embodiment shown in Figure 5A, loop 86 may be sewn and/or seam welded to the main part 87 along seam line 88.

In both examples shown in Figures 5A and 5B, the hem ropes 74, 84 and the loops 76, 86 create a side edge 72, 82 with a total diameter that is larger than a width of the guide rail slot discussed above. The welding curtain of the present disclosure is not restricted to the hem rope embodiments shown in Figures 5A and 5B. Rather, any other way of increasing the diameter/thickness of the welding curtain along its side edges may be applied. In one example, the hem ropes 74, 84 may be replaced by rigid bars or thickened seams that do not require any insert.

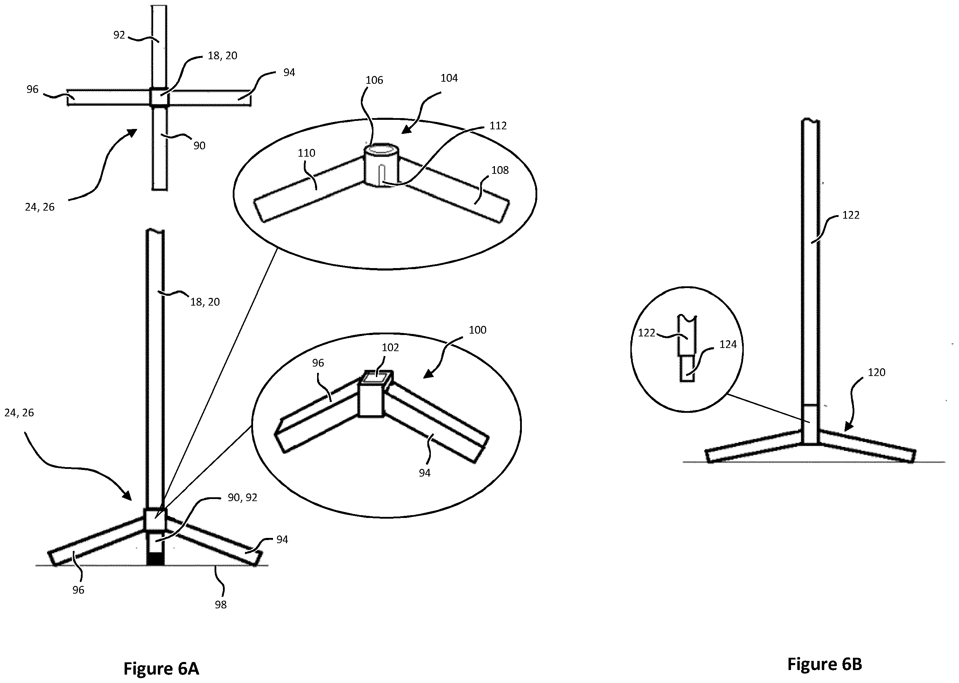

Figure 6A shows stands 24, 26 in more detail. From the top view in Figure 6A, it is clear that the stands 24, 26 may be four legged stands. A first leg 90 extends in an opposite direction to a second leg 92, third and fourth legs 94, 96 extend at 90 degree angles with respect to first and second legs 90, 92. Referring to the side view in Figure 6A, it will be appreciated that first and second legs 90, 92 may extend at 90 degrees with respect to the support struts 18, 20, i.e. parallel to a ground surface 98.

The third and fourth legs 94, 96 may be part of a slip-over assembly 100. Assembly 100 may include a central collar 102 which is constructed to fit over support struts 18, 20, such that assembly 100 can be slipped over support struts 18, 20 retrospectively, e.g. from the top of support struts 18, 20. For example, central collar 102 may be slipped over support struts 18, 20 from the top and dropped down towards first and second legs 90, 92. The third and fourth legs 94, 96 extend away from the central collar 102 and downwards. An angle between the third and fourth legs may be chosen such that the third and fourth support legs contact the ground surface when the central collar rest elevated on top of the first and second support legs 90, 92.

An inner surface of the central collar 102 preferably matches an outer surface of support struts 18, 20. The matching shape of the central collar 102 and the support struts 18, 20 will ensure correct alignment of the third and fourth legs 94, 96 with respect to the first and second legs 90, 92 and avoid rotation of the legs with respect to each other. The rectangular central collar 104 will match rectangular support struts, such as strut 15 shown in Figure 2B.

In another embodiment shown in Figure 6A, an alternative slip-over assembly 104 includes a central collar 106, which has a substantially cylindrical shape and fits an outer surface of a cylindrical support strut, such as the one shown in Figure 2A. The legs 108, 110 are arranged substantially identically to the legs 94, 96 of assembly 100. In this example, however, alignment of the third and fourth legs 108, 110 of assembly 104 may not be automatically achieved by an interaction between the outer surface of the support strut and the inner surface of the central collar 106. Rather, central collar 106 may include an orientation member 112, particularly an orientation slot, that may interact with a corresponding protrusion either on an outer surface of the support struts or on top of the first or second support legs 90, 92. The orientation member 112 also acts as an anti-rotation member when assembly 104 is connected to its respective support strut 18, 20.

Figure 6C shows a two-legged stand 120 attached to a lower end of a support strut 122. The lower end of support strut 122 may have a reduced diameter section 124, which is configured to slot into a corresponding bore of stand 120. Of course, the connection shown in Figure 6C may equivalently be applicable to the connection between support struts 18, 20 and their corresponding first and second legs 90, 92 shown in Figure 6A and 6B.

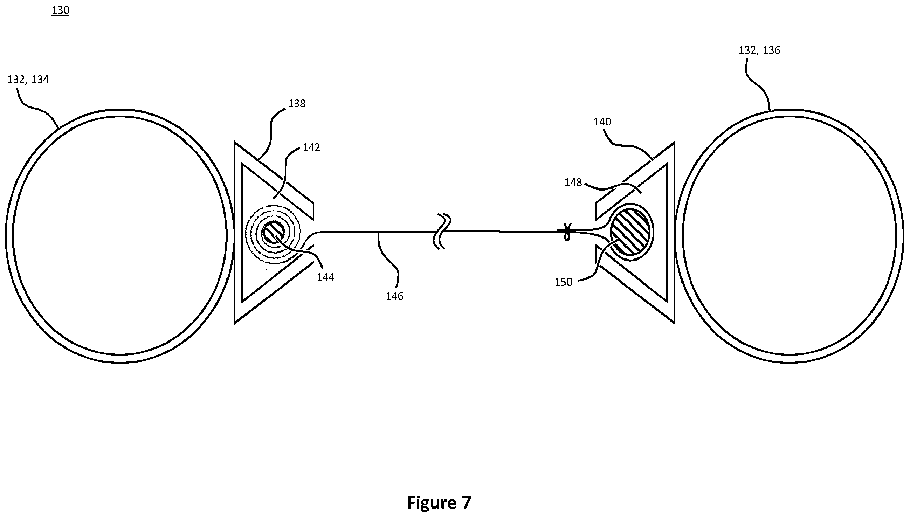

Another embodiment of the welding screen is schematically represented in Figure 7. Similar to the embodiment in Figure 1, the frame structure 132 includes a first support strut 134 and a second support strut 136. A first guide rail 138 is attached to the first support strut 134, whereas a second guide rail 140 is attached to the second support strut 136. The first guide rail 138 defines a cavity 142 for receiving a first side edge 144 of welding curtain 146. The second guide rail 140 defines a second cavity 148 for receiving a second side edge 150 of welding curtain 146. In this embodiment, one of the side edges may be spring loaded. In particular, the first side edge 144 of the embodiment shown in Figure 7 is spring loaded, such that welding curtain 146 will try to reel in around side edge 144 (only schematically represented) when no forces acts to pull support struts 134 and 136 apart. In the reverse, welding curtain 146 will unreel from first side edge 144 if the two support struts 134 and 136 are pulled apart, thereby extending welding curtain 146 gradually, and rotating side edge 144 against its spring load.

In simple terms, the embodiment of the welding screen shown in Figure 7 may be of a self-retracting type, much like a roll-out banner. Either of the side edges may be spring loaded or connected to a mechanism for reeling in the welding curtain 146 around one of the side edges. According to this embodiment, the side edges of the welding curtain 146 may have solid bars received within the seam loops explained with respect to Figures 5a and 5B. In the self-retracting design of Figure 7, an adjustable stay may be provided between the first and second support struts 134, 136 that will keep the two support struts 134, 136 at a desired distance for as long as the welding screen is in use. If the operator wants to store the welding screen away, the stay may simply be removed such that the welding curtain 146 is reeled in automatically.

The listing or discussion of an apparently prior-published document in this specification should not necessarily be taken as an acknowledgement that the document is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the disclosure.

## Claims

1. A welding screen for shielding welding work locations comprising a welding curtain and a frame structure for removably mounting the welding curtain, wherein the welding curtain is connected to the frame structure such that at least parts of a side edge of the welding curtain are received within a cavity of the frame structure.

2. The welding screen of claim 1, wherein the frame structure comprises at least one guide rail that defines the cavity for receiving at least parts of the side edge of the welding curtain.

3. The welding screen of claim 2, wherein the guide rail comprises a slot having a width that is smaller than a diameter of the side edge of the welding curtain, and wherein the width of the slot is larger than a thickness of the welding curtain between its side edges.

4. The welding screen of any of claims 2 or 3, wherein the frame structure comprises at least one support strut connected to and supporting the at least one guide rail.

5. The welding screen of claim 4, wherein the frame structure comprises a first guide rail and a second guide rail, both guide rails being connected to and supported by one support strut.

6. The welding screen of claim 5, wherein the first and second guide rails both include a longitudinal slot, and wherein the first and second guide rails are connected to their support strut such that their longitudinal slots face in substantially perpendicular directions.

7. The welding screen of any of claims 4 to 6, wherein the at least one support strut comprises a stand comprising a central collar for slipping parts of the stand over the support strut.

8. The welding screen of any of claims 1 to 7, wherein the at least one side edge of the welding curtain that is received in the cavity of the frame structure comprises a hem rope.

9. The welding screen of claim 8, wherein the side edge of the welding curtain is a loop formed with a material of the welding curtain, the loop being sized for receiving the hem rope, wherein the loop is preferably sewn and/or seam welded along a seam line of the welding curtain.

10. A frame structure for a welding screen of any one of claims 1 to 9, wherein the frame structure comprises a cavity for receiving at least parts of a side edge of the welding curtain.

11. The frame structure of claim 10, wherein the frame structure comprises at least one guide rail that defines the cavity for receiving at least parts of the side edge of the welding curtain.

12. The frame structure of claim 11, wherein the frame structure comprises at least one support strut connected to and supporting the at least one guide rail.

13. The frame structure of claim 12, wherein the frame structure comprises a first guide rail and a second guide rail, both guide rails being connected to and supported by one support strut, and wherein the first and second guide rails both include a longitudinal slot, and wherein the first and second guide rails are preferably connected to their support strut such that their longitudinal slots face in substantially perpendicular directions.

14. A welding curtain for a welding screen of any of claims 1 to 9, wherein the welding curtain comprises at least one side edge sized to be received in a cavity of a frame structure of a welding screen, and wherein the at least one side edge of the welding curtain comprises a hem rope.

15. The welding curtain of claim 14, wherein the side edge of the welding curtain is a loop formed with a material of the welding curtain, the loop being sized for receiving the hem rope, wherein the loop is preferably sewn and/or seam welded along a seam line of the welding curtain.
